# EUROPÄISCHE PATENTSCHRIFT

(11) **EP 2 956 462 B1**
(45) Veröffentlichungstag und Bekanntmachung des Hinweises auf die Patenterteilung: **07.03.2018**
(21) Anmeldenummer: 14700880.9
(22) Anmeldetag: 16.01.2014
(51) Int. Cl.: B01J 19/24, C07F 7/08, C07F 7/18, C07F 7/04

(54) **VERFAHREN ZUR VERESTERUNG VON SILIZIUMHALOGENVERBINDUNGEN IN EINER KOLONNE UND DAFÜR GEEIGNETE VORRICHTUNG**
METHOD FOR THE ESTERIFICATION OF SILICON HALOGEN COMPOUNDS IN A COLUMN, AND SUITABLE DEVICE THEREFOR
PROCÉDÉ D'ESTÉRIFICATION DE COMPOSÉS DE SILICIUM HALOGÉNÉS DANS UNE COLONNE ET DISPOSITIF CORRESPONDANT

(30) Priorität: 13.02.2013 DE 102013202325
(43) Veröffentlichungstag der Anmeldung: 23.12.2015
(73) Patentinhaber: Evonik Degussa GmbH, 45128 Essen (DE)
(72) Erfinder: BADE, Stefan, F-68220 Michelbach Le Haut (FR); SCHLADERBECK, Norbert, 65779 Kelkheim (DE); NEHLS, Andre, 79739 Schwörstadt (DE)
(86) Internationale Anmeldenummer: PCT/EP2014/050835
(87) Internationale Veröffentlichungsnummer: WO 2014/124776

(56) Entgegenhaltungen:
- US-A- 3 792 071
- US-A- 4 642 363

## Beschreibung

Die vorliegende Erfindung betrifft ein verbessertes Verfahren zur kontinuierlichen Herstellung von (Organo)Silanestern bzw. Kieselsäureestern in einer einzigen Reaktivdestillationskolonne sowie eine dafür geeignete Kolonne.

Aus EP 0 107 765 A2 ist die Umsetzung von Chlorsilanen mit Alkoholen zu Alkoxysilanen in einer Kombination von Reaktor und einer sich daran anschließenden Kolonne bekannt.

EP 0 924 215 A2 beschreibt ein Verfahren zur Herstellung von Alkoxysilanen durch Umsetzung von Organohalogensilanen mit Alkoholen mittels einer Reaktivextration. Dazu wird das Organohalogensilan in einer Flüssigkeit gelöst, mit welcher der Alkohol nicht mischbar ist und die beiden Flüssigkeiten werden miteinander in Kontakt gebracht.

In der EP 0 650 968 A1 wird ein kontinuierliches Verfahren zur Herstellung wässriger Alkali-Alkylsilikonatlösungen beschrieben. Dazu werden in einer ersten Stufe Organotrichlorsilan und Alkohol in einem Reaktor umgesetzt. In einer zweiten Stufe wird das Reaktionsgemisch aus der ersten Stufe in einer Kolonne mit weiterem Alkohol im Gegenstrom weiter umgesetzt und in einer dritten Stufe wird das Veresterungsprodukt aus der zweiten Stufe mit Alkalilauge in einem Mischreaktor zum Endprodukt umgesetzt.

Aus der DE 30 00 782 A1 ist ein kontinuierliches Verfahren zur Herstellung von SiOC-Gruppen aufweisenden Polysiloxanen bekannt. Das Verfahren beinhaltet die Umsetzung von Chlorsilanen mit Alkoholen in einer mit Rückflusskühler versehenen Kolonne bei erhöhter Temperatur. Dazu vorgeschaltet ist ein erster Reaktor, beispielsweise ein Rührkessel oder ein Rohrreaktor, in dem ein flüssiges Reaktionsgemisch aus den Reaktanten erzeugt wird. Dieses Gemisch wird am Kopf einer Kolonne eingeführt. Außerdem wird am unteren Ende der Kolonne gasförmiger Alkohol eingeführt, um die Reaktion mit dem Chlorsilan zu vervollständigen. Das Reaktionsprodukt wird am unteren Ende der Kolonne abgezogen.

EP 1 205 505 A2 beschreibt ein kontinuierliches Verfahren zur Herstellung von Organoalkoxysilanen. Das Verfahren wird in zwei Verfahrensstufen durchgeführt. Die erste Verfahrensstufe kann in einem Rührkessel oder einer Reaktionskolonne ausgeführt werden, während die zweite Verfahrensstufe in einer Reaktions-Destillationskolonne ausgeführt wird, die bei einer Sumpftemperatur von 50 bis 200 °C betrieben wird. Die Umsetzung von Organochlorsilan mit Alkohol und Wasser in der ersten Verfahrensstufe erfolgt bei Temperaturen zwischen 0 und 150 °C. Der entstehende Chlorwasserstoff wird aus dem System entfernt und das entstehende Rohprodukt nach einer mittleren Verweilzeit von 0,5 bis 180 Minuten in die zweite Verfahrensstufe überführt.

EP 1 686 132 A1 beschreibt ein kontinuierliches Verfahren zur Herstellung von SiOCenthaltenden Verbindungen, beispielsweise von Alkoxysilanen oder von alkoxyreichen Silikonharzen. Das Verfahren wird in zwei aus Kolonnen bestehenden Reaktionseinheiten durchgeführt. Dabei ist vor der ersten Kolonne ein Vorreaktor vorgesehen, in dem ein Chlorsilan mit Alkohol und gegebenenfalls mit Wasser zu einem Reaktionsgemisch umgesetzt wird, das in die erste Reaktionseinheit geführt wird.

US4642363 offenbart eine kontinuierliches Verfahren zur Herstellung von Trimethylisopropoxysilanen durch eine einzige Kolonne, wobei das Veresterungsprodukt vom Boden der Kolonne abgeführt wird;

US3792071 offenbart ein kontinuierliches Verfahren zur Veresterung von Chlorsilanen in einer einzigen Kolonne, bei der das Produkt unterhalb des Zuführungspunktes des Alkohols entnommen wird. Bei der Veresterung von Halogensilanen mit Alkoholen wird heutzutage üblicherweise eine Zwei-Kolonnen-Technologie angewendet, wobei eine Reaktorkolonne und eine Vorlaufkolonne zum Einsatz gelangen. In der Reaktorkolonne werden mittig Chlorsilan und Alkohol eingespeist. Der bei der Umsetzung dieser Verbindungen entstandene Chlorwasserstoff wird über den Kolonnenkopf abgezogen. Das bei der Umsetzung erhaltene Rohprodukt wird dem Sumpf der Reaktorkolonne unter Verwendung eines Kühlers und einer Pumpe entnommen und in die Vorlaufkolonne eingespeist. Dort wird das Rohprodukt erneut erhitzt, es wird zusätzlicher frischer Alkohol eingespeist und das vollständig abreagierte Rohprodukt wird dem Sumpf der Vorlaufkolonne entnommen.

Auch die vollständige Umsetzung von Organohalogensilan und Alkohol in einer Kolonne ist bereits bekannt. In der DE 2 061 189 A wird ein Verfahren zur kontinuierlichen Herstellung von Alkoxy(poly)silanen beschrieben. Das Verfahren umfasst die Umsetzung von Chlorsilanen mit Alkoholen und gegebenenfalls Wasser in einer mit Rückflusskühler versehenen bei erhöhter Temperatur gehaltenen Kolonne. Dabei wird das Chlorsilan am Kolonnenkopf und verdampfter Alkohol im unteren Drittel der Kolonne zugeführt. Das Reaktionsprodukt wird unterhalb der Einführung des Alkohols aus der Kolonne abgezogen. Die Temperaturen im Innenraum der Kolonne werden so eingestellt, dass während der Umsetzung stets siedender überschüssiger Alkohol am Kolonnenkopf zugegen ist. Die Kolonne wird also generell bei erhöhter Temperatur betrieben. Das vorbekannte Verfahren wird also oberhalb des Siedepunktes des betreffenden Alkohols betrieben.

Schließlich ist aus der DE 34 31 839 A1 ein Verfahren zur Herstellung von Trialkoxysilanen durch Umsetzung von Alkyltrihalogensilanen mit Alkoholen bekannt, bei dem der Alkohol dem bei oder über Siedetemperatur gehaltenen Trialkoxysilan zugefügt wird und wobei spätestens gegen Ende der Reaktion das Reaktionsgemisch unter Bedingungen einer Kolonnendestillation gehalten wird, wobei der entstehende Chlorwasserstoff abdestilliert wird und anschließend das Alkyltrialkoxysilan isoliert wird. Die Reaktion kann in einer Kombination von Reaktor und nachgeschalteter Kolonne aber auch in einer Einzelkolonne durchgeführt werden.

Die Einkolonnenveresterung ist gegenüber der Kombination von Reaktor und Kolonne sehr vorteilhaft. Man spart sich die Pumpe zwischen Reaktor- und Vorlaufkolonne und auch den Produktkühler vor der Pumpe. Zudem spart man Energie ein, weil man bei der Einkolonnenveresterung das Rohprodukt nicht mehr zwischenkühlen muss, um es anschließend wieder aufzuheizen. Darüber hinaus sind auch die Investitionskosten natürlich geringer als für eine Zweikolonnen- bzw. Reaktor-Kolonnen-Veresterung.

Die bislang bekannte Einkolonnenveresterung ist allerdings noch verbesserungsbedürftig. So hat sich gezeigt, dass die Veresterung mit dampfförmigem Alkohol zu einer Verringerung der theoretisch möglichen Umsatzausbeute führt. Auch haben Versuche ergeben, dass der Einspeiseort und die Menge des Alkohols die Selektivität der Reaktion beeinflussen. Es wurde jetzt ein Veresterungsverfahren gefunden, dass die Durchführung der Reaktion in einer Kolonne mit hoher Selektivität gestattet.

Die vorliegende Erfindung betrifft ein Verfahren zur kontinuierlichen Veresterung von Halogensilanen der Formel I mit Alkoholen der Formel II zu Silanestern der Formel III in einer einzigen Kolonne (1)

R¹ₐSiHal_{b} (I),

R²-OH (II),

R¹ₐSi-(OR²)_{b} (III),

worin R¹ Wasserstoff oder ein einwertiger organischer Rest bedeutet, wobei mehrere Reste R¹ in einem Molekül im Rahmen der gegebenen Definitionen unterschiedlich sein können,

Hal ein Halogenatom bedeutet, mehrere Hal-Atome in einem Molekül im Rahmen der gegebenen Definitionen unterschiedlich sein können,
R² ein einwertiger organischer Rest ist aber auch möglich,
a und b ganze Zahlen von 0 bis 4 bedeuten und die Summe von a und b 4 ist.

Das erfindungsgemäße Verfahren umfasst die Maßnahmen:
i) Zuführen der Gesamtmenge des für die Reaktion benötigten Halogensilans der Formel I in flüssiger Form durch Leitung (6) in das obere Drittel der Kolonne (1),
ii) Zuführen von mindestens 60 Gew.-% des für die Reaktion benötigten Alkohols der Formel II in flüssiger Form durch Leitung (7) in das obere Drittel der Kolonne (1),
iii) Zuführen der restlichen Menge des für die Reaktion benötigten Alkohols der Formel II in flüssiger Form durch Leitung (8) in das untere Drittel der Kolonne (1),
iv) Durchführen der Umsetzung des Halogensilans der Formel I mit dem Alkohol der Formel II zum Silanester der Formel III im Innern der Kolonne (1), wobei die Temperaturen im Innern der Kolonne (1) zwischen Leitung (7) und Leitung (8) unterhalb der Siedetemperatur des Alkohols der Formel II liegt,
v) Abführen des bei der Reaktion gebildeten Chlorwasserstoffs über den Kopf der Kolonne (1), und
vi) Abführen des bei der Reaktion gebildeten Veresterungsproduktes der Formel III aus dem Sumpf der Kolonne (1).

Beim erfindungsgemäßen Verfahren werden Halogensilan und Alkohol beide flüssig in die Kolonne eingespeist. Im oberen Teil der Kolonne werden Chlorsilan und Alkohol auf gleicher Höhe, aber getrennt voneinander eingeleitet. Im unteren Teil der Kolonne erfolgt eine zweite Einspeisung von Alkohol, welcher auch in flüssiger Form vorliegt, um die Produktqualität einzustellen. Die Menge an Alkohol im oberen Teil liegt typischerweise bei 70-95 Gew.-% und im unteren Teil typischerweise bei 5 - 30 Gew.-%.

Im erfindungsgemäßen Verfahren werden Halogensilan und Alkohol im Wesentlichen in stöchiometrisch erforderlichen Mengen zugeführt. Am Kopf der Kolonne wird typischerweise nur Chlorwasserstoff abgetrennt, der im Allgemeinen mit geringen Mengen an Alkohol-Aerosolen verunreinigt ist. Im Vergleich zum vorbekannten Einkolonnenverfahren unterscheidet sich das Temperaturprofil in der Kolonne beim erfindungsgemäßen Verfahren deutlich. Im Sumpf der Kolonne herrschen beim erfindungsgemäßen Verfahren hohe Temperaturen bis hin zur Siedetemperatur des Produktes, während in der Höhe der Einspeisestellen von Halogensilan und Alkoholen die Temperatur unterhalb der Siedetemperatur des Alkohols liegt, so dass der Alkohol zumindest zwischen den Einspeisestellen des Alkohols teilweise in flüssiger Form vorliegt. Zum Kopf der Kolonne hin steigt die Temperatur wieder an und kann maximal die Siedetemperatur des verwendeten Alkohols aufweisen.

Bislang war eine der bevorzugten Ausführungsformen bei der Veresterung von Halogensilanen mit Alkoholen ein Zwei-Kolonnen-Veresterungssystem. In der ersten Kolonne erfolgte der Hauptumsatz, während in der zweiten Kolonne der Umsatz vervollständigt wurde. Das Verfahren liefert hohe Umsatzgrade und eine gute Selektivität (wenig Nebenprodukte und wenig Rückstand), doch der apparative Aufwand sowie die Energiebilanz sind nicht optimal. Ein weiteres häufig eingesetztes Veresterungssystem ist die Kombination aus einem vorgeschalteten Rührkesselreaktor für den Hauptumsatz und eine nachgeschaltete Kolonne als Nachreaktor. Diese Kombination hat zwar den Vorteil einer hohen Raumzeitausbeute, doch als Nachteil ist die schlechtere Produktqualität des entstehenden Produktes zu nennen, so dass oftmals eine zweite Finishing-Kolonne, die unter Vakuum betrieben wird, nachgeschaltet wird.

Im Folgenden werden die Nachteile der bestehenden Veresterungsanlagen zusammengefasst:
- hoher apparativer Aufwand
- schlechte Energiebilanz, weil Rohprodukt abgekühlt und wiedererwärmt wird
- großer Platzbedarf in der Aufstellung der Anlage
- hohe Instandhaltungskosten aufgrund der höheren Anzahl an Apparaten
- höherer Anteil an Rückstand, damit geringere Selektivität

Überraschenderweise wurde nun gefunden, dass die Veresterungsreaktion mit hoher Selektivität auch in einer einzigen Kolonne durchgeführt werden kann, wenn die Einspeisestellen von Halogensilan und Alkohol optimiert sind. Das erfindungsgemäße Verfahren nutzt außerdem die bekannten Vorteile der Einkolonnenveresterung:
- Deutlich verringerter apparativer Aufwand: Im Vergleich zu einer Zwei-Kolonnen-Veresterung entfallen verbindende Rohrleitungen zwischen den Kolonnen, ein Produktkühler im Sumpfaustrag der ersten Kolonne, eine Rohproduktpumpe im Sumpf der ersten Kolonne, ein Kopfkondensator an der zweiten Kolonne, ein Umlaufverdampfer an der zweiten Kolonne, die zweite Kolonne selbst und die gesamte Messtechnik der zweiten Kolonne.
- Verbesserte Energiebilanz: Mit Hilfe eines Umlaufverdampfers wird die gesamte notwendige Energie eingetragen. Wärmeverluste gibt es nur an einer Kolonne, nicht mehr an zwei Kolonnen. Es entfällt das Abkühlen des Rohprodukts und Wiederaufheizen in einer zweiten Kolonne. In der Einkolonnenveresterung wird lediglich ein Produktkühler im Sumpf eingesetzt, um das Produkt vor der Pumpe und dem nachgeschalteten Lagerbehälter abzukühlen.
- Geringere Instandhaltungskosten: Aufgrund des geringeren Apparateeinsatzes werden die Instandhaltungskosten deutlich verringert.
- Weniger Platzbedarf einer Einkolonnenveresterung im Vergleich zu einer Zwei-Kolonnenveresterung.
- Weniger Regelkreise in der Einkolonnenveresterung.
- Weniger Rückstandsbildung in der Einkolonnenveresterung, aufgrund des Wegfalls der Verfahrensschritte Abkühlen und Wiederaufheizen.

Die erfindungsgemäße Veresterungsreaktion lässt sich wie folgt beschreiben:

R¹ₙ,SiHal₄₋ₙ + (4 - n) R²OH → R¹ₙSi(OR²)₄₋ₙ + (4 - n) HHal,

wobei R¹, R² und Hal die oben beschriebenen Definitionen besitzen und n eine ganze Zahl von 0 bis 3 ist.

Das Halogensilan wird mit Alkohol verestert und hierbei wird gasförmiger Chlorwasserstoff ("HCl") freigesetzt. Um das sich im Alkohol und im Produkt gut lösliche HCl abzutrennen, muss Stoffaustauschfläche bereitgestellt werden und die Wärme für die Desorption des HCl muss eingetragen werden.

Erfindungsgemäß wird diese Umsetzung in einer Reaktivdestillation durchgeführt. Hier erfolgt zeitgleich die chemische Reaktion und die stoffliche Trennung des HCl.

Eine besonders bevorzugte erfindungsgemäßen Reaktion ist die Umsetzung von Vinyltrichlorsilan mit Methanol oder mit Ethanol zu Vinyltrimethoxysilan oder Vinyltriethoxysilan.

R¹ kann Wasserstoff oder ein einwertiger organischer Rest sein. Bei Anwesenheit von mehreren Resten R¹ im Molekül können diese Reste im Rahmen der gegebenen Definitionen unterschiedlich sein.

R² ist ein einwertiger organischer Rest.

Bei den organischen Resten kann es sich um lineare oder verzweigte Alkyl, Alkenyl, Cycloalkyl, Aryl, Aralkyl und/oder Heterocyclyl handeln. Diese können gegebenenfalls substitutiert sein, beispielsweise mit Alkyl, Alkoxy, Hydroxy, Amino, Halogen oder Nitro. Bei den Alkylresten können ein oder mehrere nicht direkt miteinander benachbarte Kohlenstoffatome durch Sauerstoff- oder Schwefelatome oder durch Iminogruppen ersetzt sein.

Alkylgruppen können geradkettig oder verzweigt sein und typischerweise ein bis zwanzig Kohlenstoffatome aufweisen. Bevorzugt werden C₁-C₆-Alkylreste. Beispiele für Alkylreste sind Methyl, Ethyl, n-Propyl, iso-Propyl, n-Butyl, sek.-Butyl, tert.-Butyl, n-Pentyl und n-Hexyl. Bevorzugt werden Methyl und Ethyl. Substituierte Alkylgruppen können u.a. Hydroxyalkylgruppen sein, wie beispielsweise Hydroxyethyl, Hydroxypropyl und Hydroxybutyl. Ferner werden als einwertiger organischer Rest für R² Methoxyethyl [CH₃-O-(CH₂)₂-] oder Ethoxymethyl [CH₃-CH₂-O-CH₂-] sowie Aminoethyl [H₂N-(CH₂)₂-] bevorzugt.

Alkenylgruppen können geradkettig oder verzweigt sein und typischerweise zwei bis zwanzig Kohlenstoffatome aufweisen. Bevorzugt werden C₂-C₃-Alkenylreste. Alkenylreste können ein oder mehrere Doppelbindungen aufweisen. Bei Anwesenheit von mehreren Doppelbindungen sind diese mindestens durch eine Einfachbindung voneinander separiert. Bevorzugt ist nur eine Doppelbindung vorhanden. Diese befindet sich besonders bevorzugt in alpha-Stellung. Beispiele für Alkenylreste sind Vinyl und Allyl. Bevorzugt wird Vinyl.

Cycloalkylgruppen weisen in der Regel fünf bis acht Ringkohlenstoffatome auf. Bevorzugt werden Cycloalkylgruppen mit sechs Ringkohlenstoffatomen. Beispiele für Cycloalkylreste sind Cyclopentyl, Cyclohexyl und Cycloheptyl. Bevorzugt wird Cyclohexyl.

Arylgruppen können ein- oder mehrkernig sein. Mehreren Kerne können über Einfachbindungen oder über Brückengruppen miteinander verbunden sein, beispielsweise über -O-, -CO- oder -CH₂- Gruppen. Beispiele für Arylreste sind Phenyl oder Naphthyl. Bevorzugt wird Phenyl. Aralkylgruppen sind einwertige organische Reste mit einer Arylgruppe, die kovalent mit einer Alkylengruppe verbunden ist und am Alkylenrest eine Bindung zum Rest des Moleküls aufweist. Beispiele für Arylreste sind oben aufgeführt. Alkylenreste können geradkettig oder verzweigt sein und typischerweise ein bis zwanzig Kohlenstoffatome aufweisen. Bevorzugt werden Aralkylreste mit C₁-C₆-Alkylenresten. Ein Beispiel für einen Aralkylrest ist Benzyl. Heterocyclylgruppen sind ringförmige organische Reste mit Heteroatomen, beispielsweise Sauerstoff-, Schwefel- oder Stickstoffatomen, im Ring. Heterocyclylgruppen weisen in der Regel fünf bis acht Ringatome auf, wovon typischerweise ein bis drei Ringatome Heteroatome sind. Bevorzugt werden Heterocyclylgruppen mit fünf oder sechs Ringatomen, die besonders bevorzugt ein oder zwei Sauerstoff-, Schwefel- oder Stickstoffatome aufweisen, wobei mehrere Sauerstoffatome nicht einander benachbart sind.

Unter "Hal" sind im Rahmen dieser Beschreibung Halogenatome zu verstehen, also Fluor, Chlor, Brom und lod. Bevorzugt werden Chlor und Brom, ganz besonders bevorzugt wird Chlor. In einem bevorzugten Verfahren werden Verbindungen der Formel I eingesetzt, worin R¹ Wasserstoff und/oder C₁-C₆-Alkyl und/oder Vinyl, insbesondere Wasserstoff, Methyl, Ethyl oder Vinyl bedeutet, und worin R² C₁-C₆-Alkyl, insbesondere Methyl oder Ethyl bedeutet.

In einem weiteren bevorzugten Verfahren beträgt die durch Leitung (7) zugeführte Menge an Alkohol der Formel II 70 bis 95 Gew.-% der für die Reaktion benötigten Menge, und die restliche Menge des für die Reaktion benötigten Alkohols der Formel II wird in flüssiger Form durch Leitung (8) in das untere Drittel der Kolonne (1) eingeführt.
Besonders bevorzugt werden die Verbindungen der Formeln I und II durch Leitungen (6, 7, 8) mittig in die Kolonne (1) eingeführt, am kolonnenseitigen Ende befindet sich ein nach unten gerichteter 90° Rohrbogen.

Bevorzugt wird ein Verfahren, bei dem die Temperatur des Alkohols der Formel II in Leitungen (7, 8) 10 bis 30 °C beträgt und/oder bei dem die Temperatur des Halogensilans der Formel I in Leitung (6) 10 bis 30 °C beträgt.

Bevorzugt wird ein Verfahren, bei dem die Umsetzung der Verbindungen der Formel I und II in einer Kolonne (1) durchgeführt wird, die Füllkörper oder strukturierte Packungen enthält.
Besonders bevorzugt wird ein Verfahren, bei dem das Einleiten des Halogensilans der Formel I und eines Teils des Alkohols der Formel II jeweils im oberen Teil der Kolonne (1) unterhalb der obersten Packung (1a) erfolgt und/oder bei dem das Einleiten des restlichen Teils des Alkohols der Formel II im unteren Teil der Kolonne (1) oberhalb der untersten Packung (1a) erfolgt.

Das erfindungsgemäße Verfahren kann bei unterschiedlichsten Drucken durchgeführt werden. Neben Normaldruck sind Verfahrensweisen bei Überdruck oder auch im Vakuum möglich. Bevorzugt wird die Umsetzung der Verbindungen der Formel I und II im Druckbereich zwischen 700 hPa abs bis 1300 hPa abs durchgeführt.

Die Beheizung der Kolonne (1) erfolgt typischerweise durch einen Umlaufverdampfer (3), der im unteren Drittel der Kolonne (1) angebracht ist und der das in der Kolonne (1) befindliche Sumpfprodukt beheizt.

Die Erfindung betrifft auch eine Kolonne (1) zur kontinuierlichen Veresterung der oben definierten Halogensilanen der Formel I mit Alkoholen der Formel II zu Silanestern der Formel III mit den folgenden Elementen:
A) Leitung (6), die in das obere Drittel der Kolonne (1) mündet und die der Zuführung des Halogensilans der Formel I dient,
B) Leitung (7), die in das obere Drittel der Kolonne (1) mündet und die der Zuführung eines Teils des für die Reaktion benötigten Alkohols der Formel II dient,
C) Leitung (8), die in das untere Drittel der Kolonne (1) mündet und die der Zuführung des restlichen Teils des für die Reaktion benötigten Alkohols dient,
D) Umlaufverdampfer (3), der im unteren Drittel der Kolonne angebracht ist und der das in der Kolonne (1) befindliche Sumpfprodukt beheizt,
E) Leitung (9) zum Abführen des bei der Reaktion gebildeten Halogenwasserstoffs über den Kopf der Kolonne (1), und
F) Leitung (10) zum Abführen des bei der Reaktion gebildeten Veresterungsproduktes der Formel III aus dem Sumpf der Kolonne (1).

In einer bevorzugten Variante der erfindungsgemäßen Kolonne (1) ist am Kopf der Kolonne (1) ein Kondensator (2) vorgesehen.

In einer weiteren bevorzugten Variante der Kolonne (1) ist am unteren Ende der Kolonne (1) ein Produktkühler (4) vorgesehen und vorzugsweise ist nach dem Produktkühler (4) eine Pumpe (5) geschaltet, welche das Reaktionsprodukt aus der Kolonne (1) befördert.

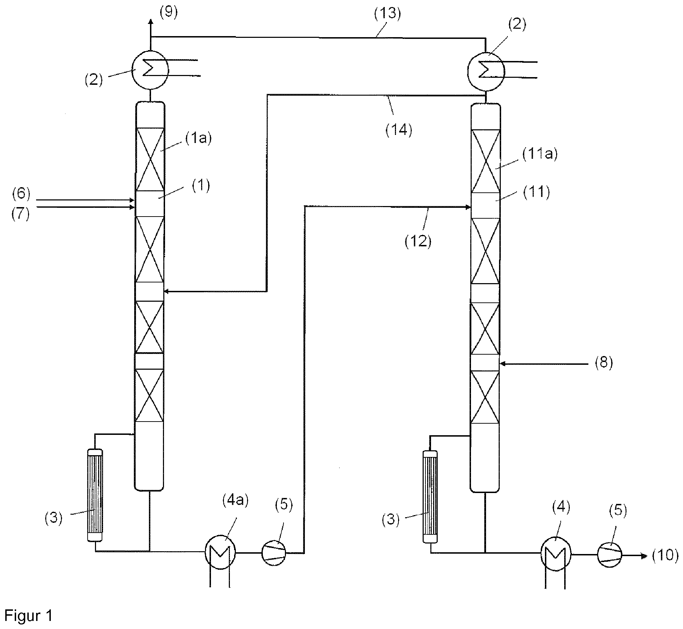

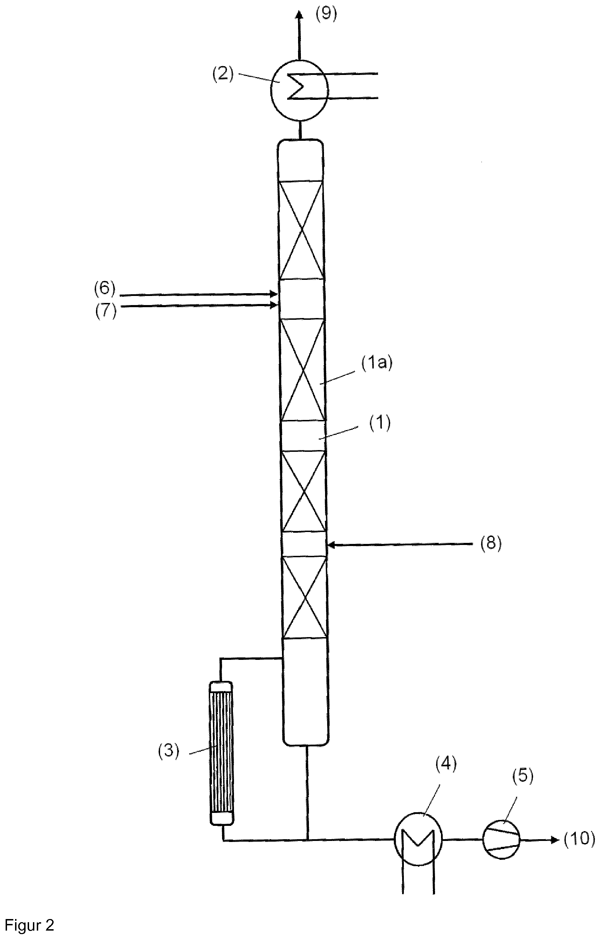

In den nachfolgenden Beispielen und in den Figuren 1 und 2 sind Verfahren der Veresterung von Trichlorsilan mit Alkohol in zwei in Reihe geschalteten Kolonnen bzw. in einer Kolonne schematisch dargestellt.

### Beispiele

### Beispiel 1 (Vergleichsbeispiel):

Dieses Beispiel beschreibt eine herkömmliche Veresterung von Vinyltrichlorsilan mit Alkohol, z.B. mit Methanol oder Ethanol, in zwei in Reihe geschalteten Kolonnen. Die apparative Verschaltung ist in Figur 1 dargestellt.

In einer mit Kopfkondensator (2) und Umlaufverdampfer (3) ausgerüsteten Reaktorkolonne (1), vgl. Figur 1, werden über getrennte Leitungen (6, 7) Vinyltrichlorsilan und Alkohol zugeführt. Diese Leitungen münden im oberen Drittel in die Kolonne, welche im Innern Packungen (1a) aufweist. Der bei der Umsetzung entstandene Chlorwasserstoff wird über Kopf durch Leitung (9) abgeführt. Vinyltrichlorsilan und Alkohol setzen sich in der Reaktorkolonne (1) teilweise um und der Produkt enthaltende Strom bewegt sich im Innern der Kolonne (1) in Richtung Sumpf. Vorlaufkolonne (11) ist ebenfalls mit Packungen (11a), Kopfkondensator (2) und Umlaufverdampfer (3) ausgerüstet. Ein Teil des Rücklaufs aus Vorlaufkolonne (11) wird über Leitung (14) in die Reaktorkolonne (1) rückgeführt. Außerdem wird im unteren Drittel der Vorlaufkolonne (11) durch Leitung (8) weiterer Alkohol eingespeist, damit die stöchiometrisch erforderliche Menge an Alkohol im Gesamtsystem Reaktorkolonne (1) und Vorlaufkolonne (11) vorliegt. Der Sumpf aus Reaktorkolonne (1) wird im Rohproduktkühler (4a) abgekühlt und durch Pumpe (5) über Leitung (12) in die Vorlaufkolonne (11) befördert. Leitung (12) mündet im oberen Drittel in die Vorlaufkolonne (11). Das Endprodukt der Reaktion wird aus dem Sumpf der Vorlaufkolonne (11) abgeführt, wird im Produktkühler (4) abgekühlt und durch Pumpe (5) über Leitung (10) der Vorlaufkolonne (11) entnommen. Die Umlaufverdampfer (3) dienen der Zuführung von thermischer Energie zur Beheizung der beiden Kolonnen (1, 11).

### Beispiel 2:

Dieses Beispiel beschreibt eine erfindungsgemäße Veresterung von Vinyltrichlorsilan mit Alkohol, z.B. mit Methanol oder Ethanol, in einer Reaktionskolonne ohne Verwendung einer Vorlaufkolonne. Die apparative Verschaltung ist in Figur 2 dargestellt.

Im oberen Teil der Reaktionskolonne (1), vgl. Figur 2, wird Vinyltrichlorsilan und die Hauptmenge an Alkohol über getrennte Leitungen (6, 7) in gleicher Höhe (aber nicht vorgemischt) eingespeist. Die Einspeisestelle für beide Komponenten liegt unterhalb der obersten Packung (1a). Im unteren Teil der Kolonne, oberhalb der untersten Packung (1a), wird die Restmenge an Alkohol durch Leitung (8) eingebracht. Die Reaktionskolonne (1) wird bei geringem Überdruck von 80 hPa betrieben. Die Sumpftemperatur liegt bei 168 °C, die Kopftemperatur bei 40 °C. Eingesetzt wird eine Reaktivdestillation mit 4 Füllkörperbetten (Sattelkörper), der Innendurchmesser der Reaktionskolonne (1) beträgt 300 mm. Die Massenströme sind in der folgenden Tabelle zusammengefasst:

| **Komponente** | **Massenstrom kg/h** |
|---|---|
| Vinyltrichlorsilan | 300,00 |
| Alkohol Leitung (7) | 240,00 |
| Alkohol Leitung (8) | 13,82 |
| Vinyltriethoxysilan | 349,44 |
| Chlorwasserstoff | 200,96 |
| Hochsieder | 3,42 |

Im Sumpf der Reaktionskolonne (1) werden 349,44 kg/h Vinyltriethoxysilan entnommen. Das Produkt wird durch Produktkühler (4) gekühlt und durch Pumpe (5) über Leitung (10) aus der Reaktionskolonne (1) ausgeschleust. Am Umlaufverdampfer (3) wird die Menge von 160 kg/h Dampf eingespeist. Das durch den Umlaufverdampfer (3) erhitzte Produkt wird in die Reaktionskolonne (1) rückgeführt und dient dem Erhitzen des Kolonneninhalts. Im Kopf der Kolonne wird der Massestrom im Innern im Kopfkondensator (2) gekühlt und es werden 200,96 kg/h gasförmiges HCl über Leitung (9) entnommen.

Der Anteil des Rückstandes im Sumpfprodukt zeigt an, dass Vinyltriethoxysilan mit einer Selektivität von 98,8 % gebildet wird. In der in Figur 1 dargestellten Zwei-Kolonnen-Veresterung kommt man bei der Veresterung von Vinyltrichlorsilan mit Ethanol im besten Fall auf eine Selektivität von 98,0 %.

### Beispiel 3:

Dieses Beispiel beschreibt eine erfindungsgemäße Veresterung von Tetrachlorsilan mit Ethanol, in einer Reaktionskolonne wie im Beispiel 2 beschrieben (Figur 2).

Im oberen Teil der Reaktionskolonne (1), vgl. Figur 2, wird Tetrachlorsilan und die Hauptmenge an Ethanol über getrennte Leitungen (6, 7) in gleicher Höhe (aber nicht vorgemischt) eingespeist. Die Einspeisestelle für beide Komponenten liegt unterhalb der obersten Packung (1a). Im unteren Teil der Kolonne, oberhalb der untersten Packung (1a), wird die Restmenge an Alkohol durch Leitung (8) eingebracht. Die Reaktionskolonne (1) wird bei geringem Überdruck von 80 hPa betrieben. Die Sumpftemperatur liegt bei 176 °C, die Kopftemperatur bei 38 °C. Eingesetzt wird eine Reaktivdestillation mit 4 Füllkörperbetten (Sattelkörper), der Innendurchmesser der Reaktionskolonne (1) beträgt 300 mm. Die Massenströme sind in der folgenden Tabelle zusammengefasst:

| **Komponente** | **Massenstrom kg/h** |
|---|---|
| Tetrachlorsilan | 300,00 |
| Alkohol Leitung (7) | 305,00 |
| Alkohol Leitung (8) | 18,65 |
| Tetraethoxysilan | 365,65 |
| Chlorwasserstoff | 256,25 |
| Hochsieder | 1,75 |

Im Sumpf der Reaktionskolonne (1) werden 365,65 kg/h Tetraethoxysilan entnommen. Das Produkt wird durch Produktkühler (4) gekühlt und durch Pumpe (5) über Leitung (10) aus der Reaktionskolonne (1) ausgeschleust. Am Umlaufverdampfer (3) wird die Menge von 160 kg/h Dampf eingespeist. Das durch den Umlaufverdampfer (3) erhitzte Produkt wird in die Reaktionskolonne (1) rückgeführt und dient dem Erhitzen des Kolonneninhalts. Im Kopf der Kolonne wird der Massestrom im Innern im Kopfkondensator (2) gekühlt und es werden 256,25 kg/h gasförmiges HCl über Leitung (9) entnommen.

Der Anteil des Rückstandes im Sumpfprodukt zeigt an, dass Tetraethoxysilan mit einer Selektivität von 99,4 % gebildet wird. In der in Figur 1 dargestellten Zwei-Kolonnen-Veresterung kommt man bei der Veresterung von Tetrachlorsilan mit Ethanol im besten Fall auf eine Selektivität von 98,7 %.

## Patentansprüche

1. Verfahren zur kontinuierlichen Veresterung von Halogensilanen der Formel I mit Alkoholen der Formel II zu Silanestern der Formel III in einer einzigen Kolonne (1)
R¹ₐSiHal_{b} (I),
R²-(OH) (II),
R¹ₐSi-(OR²)_{b} (III),
worin R¹ Wasserstoff oder ein einwertiger organischer Rest bedeutet, wobei mehrere Reste R¹ in einem Molekül im Rahmen der gegebenen Definitionen unterschiedlich sein können,
Hal ein Halogenatom bedeutet, mehrere Hal-Atome in einem Molekül im Rahmen der gegebenen Definitionen unterschiedlich sein können,
R² ein einwertiger organischer Rest ist,
a und b ganze Zahlen von 0 bis 4 bedeuten und die Summe von a und b 4 ist, mit den Maßnahmen:
i) Zuführen der Gesamtmenge des für die Reaktion benötigten Halogensilans der Formel I in flüssiger Form durch Leitung (6) in das obere Drittel der Kolonne (1),
ii) Zuführen von mindestens 60 Gew.-% des für die Reaktion benötigten Alkohols der Formel II in flüssiger Form durch Leitung (7) in das obere Drittel der Kolonne (1),
iii) Zuführen der restlichen Menge des für die Reaktion benötigten Alkohols der Formel II in flüssiger Form durch Leitung (8) in das untere Drittel der Kolonne (1),
iv) Durchführen der Umsetzung des Halogensilans der Formel I mit dem Alkohol der Formel II zum Silanester der Formel III im Innern der Kolonne (1), wobei die Temperatur im Innern der Kolonne (1) zwischen Leitung (7) und Leitung (8) unterhalb der Siedetemperatur des Alkohols der Formel II liegt,
v) Abführen des bei der Reaktion gebildeten Chlorwasserstoffs über den Kopf der Kolonne (1), und
vi) Abführen des bei der Reaktion gebildeten Veresterungsproduktes der Formel III aus dem Sumpf der Kolonne (1).

2. Verfahren nach Anspruch 1,
**dadurch gekennzeichnet,**
**dass** R¹ und/oder R² organische Reste sind, die ausgewählt werden aus lineare oder verzweigte Alkyl, Alkenyl, Cycloalkyl, Aryl, Aralkyl und/oder Heterocyclyl, die gegebenenfalls mit Alkyl, Alkoxy, Hydroxy, Amino, Halogen oder Nitro substitutiert sind, oder worin ein oder mehrere nicht direkt miteinander benachbarte Kohlenstoffatome in Alkylgruppen durch Sauerstoff- oder Schwefelatome oder durch Iminogruppen ersetzt sind, oder worin R¹ Wasserstoff bedeutet.

3. Verfahren nach Anspruch 1,
**dadurch gekennzeichnet,**
**dass** R¹ Wasserstoff und/oder C₁-C₆-Alkyl und/oder Vinyl, insbesondere Wasserstoff, Methyl, Ethyl oder Vinyl bedeutet, und das R² C₁-C₆-Alkyl, insbesondere Methyl oder Ethyl bedeutet.

4. Verfahren nach Anspruch 1,
**dadurch gekennzeichnet,**
**dass** die durch Leitung (7) zugeführte Menge an Alkohol der Formel II 70 bis 95 Gew.-% der für die Reaktion benötigten Menge beträgt, und dass die restliche Menge des für die Reaktion benötigten Alkohols der Formel II in flüssiger Form durch Leitung (8) in das untere Drittel der Kolonne (1) eingeführt wird.

5. Verfahren nach Anspruch 1,
**dadurch gekennzeichnet,**
**dass** die Verbindungen der Formeln I und II durch Leitungen (6, 7, 8) in die Kolonne (1) eingeführt werden, an deren kolonnenseitigem Ende sich nach unten gerichtete vertikale 90° Bögen befinden.

6. Verfahren nach Anspruch 1,
**dadurch gekennzeichnet,**
**dass** die Temperatur des Alkohols der Formel II in Leitungen (7, 8) 10 bis 30 °C beträgt.

7. Verfahren nach Anspruch 1,
**dadurch gekennzeichnet,**
**dass** die Temperatur des Halogensilans der Formel I in Leitung (6) 10 bis 30 °C beträgt.

8. Verfahren nach Anspruch 1,
**dadurch gekennzeichnet,**
**dass** das Einleiten des Halogensilans der Formel I und eines Teils des Alkohols der Formel II jeweils im oberen Teil der Kolonne (1) unterhalb der obersten Packung (1a) erfolgt.

9. Verfahren nach Anspruch 1,
**dadurch gekennzeichnet,**
**dass** das Einleiten des restlichen Teils des Alkohols der Formel II im unteren Teil der Kolonne (1) oberhalb der untersten Packung (1a) erfolgt.

10. Verfahren nach Anspruch 1,
**dadurch gekennzeichnet,**
**dass** die Umsetzung der Verbindungen der Formel I und II in einer Kolonne (1) durchgeführt wird, die Füllkörper oder strukturierte Packungen enthält.

11. Verfahren nach Anspruch 1,
**dadurch gekennzeichnet,**
**dass** die Umsetzung der Verbindungen der Formel I und II im Druckbereich zwischen 700 hPa abs bis 1300 hPa abs erfolgt.

12. Verfahren nach Anspruch 1,
**dadurch gekennzeichnet,**
**dass** die Beheizung der Kolonne (1) durch einen Umlaufverdampfer (3) erfolgt, der im unteren Drittel der Kolonne (1) angebracht ist und der das in der Kolonne (1) befindliche Sumpfprodukt beheizt.

13. Kolonne (1) zur kontinuierlichen Veresterung von Halogensilanen der Formel I mit Alkoholen der Formel II zu Silanestern der Formel III nach Anspruch 1 mit den folgenden Elementen:
A) Leitung (6), die in das obere Drittel der Kolonne (1) mündet und die der Zuführung des Halogensilans der Formel I dient,
B) Leitung (7), die in das obere Drittel der Kolonne (1) mündet und die der Zuführung eines Teils des für die Reaktion benötigten Alkohols der Formel II dient,
C) Leitung (8), die in das untere Drittel der Kolonne (1) mündet und die der Zuführung des restlichen Teils des für die Reaktion benötigten Alkohols dient,
D) Umlaufverdampfer (3), der im unteren Drittel der Kolonne angebracht ist und der das in der Kolonne (1) befindliche Sumpfprodukt beheizt,
E) Leitung (9) zum Abführen des bei der Reaktion gebildeten Halogenwasserstoffs über den Kopf der Kolonne (1), und
F) Leitung (10) zum Abführen des bei der Reaktion gebildeten Veresterungsproduktes der Formel III aus dem Sumpf der Kolonne (1).

14. Kolonne (1) nach Anspruch 13,
**dadurch gekennzeichnet,**
**dass** am Kopf der Kolonne (1) ein Kondensator (2) vorgesehen ist.

15. Kolonne (1) nach Anspruch 13,
**dadurch gekennzeichnet,**
**dass** am unteren Ende der Kolonne (1) ein Produktkühler (4) vorgesehen ist.

16. Kolonne (1) nach Anspruch 15,
**dadurch gekennzeichnet,**
**dass** nach dem Produktkühler (4) eine Pumpe (5) geschaltet ist, welche das Reaktionsprodukt aus der Kolonne (1) befördert.

## Claims

1. Process for continuously esterifying halosilanes of the formula I with alcohols of the formula II to give silane esters of the formula III in a single column (1)
R¹ₐSiHal_{b} (I)
R²-(OH) (II)
R¹ₐSi-(OR²)_{b} (III)
in which R¹ is hydrogen or a monovalent organic radical, where any two R¹ radicals within a molecule may be different within the scope of the given definitions,
Hal is a halogen atom, a plurality of Hal atoms within a molecule may be different within the scope of the given definitions,
R² is a monovalent organic radical,
a and b are integers from 0 to 4 and the sum total of a and b is 4,
comprising the measures of:
i) feeding the total amount of the halosilane of the formula I required for the reaction in liquid form through line (6) into the upper third of the column (1),
ii) feeding at least 60% by weight of the alcohol of the formula II required for the reaction in liquid form through line (7) into the upper third of the column (1),
iii) feeding the remainder of the alcohol of the formula II required for the reaction in liquid form through line (8) into the lower third of the column (1),
iv) conducting the reaction of the halosilane of the formula I with the alcohol of the formula II to give the silane ester of the formula III in the interior of the column (1), the temperature in the interior of the column (1) between line (7) and line (8) being below the boiling temperature of the alcohol of the formula II,
v) removing the hydrogen chloride formed in the reaction via the top of the column (1), and
vi) removing the esterification product of the formula III formed in the reaction from the bottom of the column (1).

2. Process according to Claim 1,
**characterized in that**
R¹ and/or R² are organic radicals selected from linear and branched alkyl, alkenyl, cycloalkyl, aryl, aralkyl and/or heterocyclyl, each of which is optionally substituted by alkyl, alkoxy, hydroxyl, amino, halogen or nitro, or in which one or more carbon atoms not directly adjacent to one another in alkyl groups are replaced by oxygen or sulphur atoms or by imino groups, or in which R¹ is hydrogen.

3. Process according to Claim 1,
**characterized in that**
R¹ is hydrogen and/or C₁-C₆-alkyl and/or vinyl, especially hydrogen, methyl, ethyl or vinyl, and **in that** R² is C₁-C₆-alkyl, especially methyl or ethyl.

4. Process according to Claim 1,
**characterized in that**
the amount of alcohol of the formula II fed in through line (7) is 70% to 95% by weight of the amount required for the reaction, and **in that** the remaining amount of the alcohol of the formula II required for the reaction is introduced in liquid form into the lower third of column (1) through line (8) .

5. Process according to Claim 1,
**characterized in that**
the compounds of the formulae I and II are introduced into the column (1) through lines (6, 7, 8) in which there are 90° bends directed vertically downward at the column ends thereof.

6. Process according to Claim 1,
**characterized in that**
the temperature of the alcohol of the formula II in lines (7, 8) is 10 to 30°C.

7. Process according to Claim 1,
**characterized in that**
the temperature of the halosilane of the formula I in line (6) is 10 to 30°C.

8. Process according to Claim 1,
**characterized in that**
the halosilane of the formula I and a portion of the alcohol of the formula II are each introduced in the upper portion of the column (1) below the uppermost packing element (1a).

9. Process according to Claim 1,
**characterized in that**
the remaining portion of the alcohol of the formula II is introduced in the lower portion of the column (1) above the lowermost packing element (1a).

10. Process according to Claim 1,
**characterized in that**
the reaction of the compounds of the formulae I and II is conducted in a column (1) containing random packings or structured packings.

11. Process according to Claim 1,
**characterized in that**
the reaction of the compounds of the formulae I and II is effected in the pressure range between 700 hPa abs and 1300 hPa abs.

12. Process according to Claim 1,
**characterized in that**
the column (1) is heated by a circulation evaporator (3) which is mounted in the lower third of the column (1) and heats the bottom product present in the column (1).

13. Column (1) for continuously esterifying halosilanes of the formula I with alcohols of the formula II to give silane esters of the formula III according to Claim 1, comprising the following elements:
A) line (6) which opens into the upper third of the column (1) and which serves to feed in the halosilane of the formula I,
B) line (7) which opens into the upper third of the column (1) and which serves to feed in a portion of the alcohol of the formula II required for the reaction,
C) line (8) which opens into the lower third of the column (1) and which serves to feed in the remaining portion of the alcohol required for the reaction,
D) circulation evaporator (3) which is mounted in the lower third of the column and heats the bottom product present in the column (1),
E) line (9) for removing the hydrogen halide formed in the reaction via the top of the column (1), and
F) line (10) for removing the esterification product of the formula III formed in the reaction from the bottom of the column (1).

14. Column (1) according to Claim 13,
**characterized in that**
a condenser (2) is provided at the top of the column (1).

15. Column (1) according to Claim 13,
**characterized in that**
a product cooler (4) is provided at the lower end of the column (1).

16. Column (1) according to Claim 15,
**characterized in that**
a pump (5) connected downstream of the product cooler (4) conveys the reaction product out of the column (1).

## Revendications

1. Procédé d'estérification continue d'halogénosilanes de formule I avec des alcools de formule II en esters de silane de formule III dans une colonne unique (1)
R¹ₐSiHal_{b} (I)
R²-(OH) (II)
R¹ₐSi-(OR²)_{b} (III)
dans lesquelles R¹ signifie l'hydrogène ou un radical organique monovalent, plusieurs radicaux R¹ dans une molécule pouvant être différents dans le cadre des définitions indiquées,
Hal signifie un atome d'halogène, plusieurs atomes Hal dans une molécule pouvant être différents dans le cadre des définitions indiquées,
R² est un radical organique monovalent,
a et b signifient des nombres entiers de 0 à 4 et la somme de a et b vaut 4,
comprenant les mesures suivantes :
i) l'introduction de la totalité de l'halogénosilane de formule I nécessaire pour la réaction sous forme liquide par la conduite (6) dans le tiers supérieur de la colonne (1),
ii) l'introduction d'au moins 60 % en poids de l'alcool de formule II nécessaire pour la réaction sous forme liquide par la conduite (7) dans le tiers supérieur de la colonne (1),
iii) l'introduction de la quantité restante de l'alcool de formule II nécessaire pour la réaction sous forme liquide par la conduite (8) dans le tiers inférieur de la colonne (1),
(iv) la réalisation de la réaction de l'halogénosilane de formule I avec l'alcool de formule II pour former l'ester de silane de formule III à l'intérieur de la colonne (1), la température à l'intérieur de la colonne (1) entre la conduite (7) et la conduite (8) étant inférieure à la température d'ébullition de l'alcool de formule II,
v) le déchargement du chlorure d'hydrogène formé lors de la réaction par la tête de la colonne (1), et
vi) le déchargement du produit d'estérification de formule III formé lors de la réaction du fond de la colonne (1).

2. Procédé selon la revendication 1, **caractérisé en ce que** R¹ et/ou R² sont des radicaux organiques qui sont choisis parmi alkyle, alcényle, cycloalkyle, aryle, aralkyle et/ou hétérocyclyle linéaires ou ramifiés, qui sont éventuellement substitués avec alkyle, alcoxy, hydroxy, amino, halogène ou nitro, ou dans lesquels un ou plusieurs atomes de carbone non directement voisins les uns des autres dans des groupes alkyle sont remplacés par des atomes d'oxygène ou de soufre ou par des groupes imino, ou R¹ signifie hydrogène.

3. Procédé selon la revendication 1, **caractérisé en ce que** R¹ signifie hydrogène et/ou alkyle en C₁-C₆ et/ou vinyle, notamment hydrogène, méthyle, éthyle ou vinyle, et R² signifie alkyle en C₁-C₆, notamment méthyle ou éthyle.

4. Procédé selon la revendication 1, **caractérisé en ce que** la quantité d'alcool de formule II introduite par la conduite (7) est de 70 à 95 % en poids de la quantité nécessaire pour la réaction, et **en ce que** la quantité restante de l'alcool de formule II nécessaire pour la réaction est introduite sous forme liquide par la conduite (8) dans le tiers inférieur de la colonne (1).

5. Procédé selon la revendication 1, **caractérisé en ce que** les composés de formule I et II sont introduits dans la colonne (1) par les conduites (6, 7, 8), aux extrémités du côté de la colonne desquelles se trouvent des coudes de 90° verticaux orientés vers le bas.

6. Procédé selon la revendication 1, **caractérisé en ce que** la température de l'alcool de formule II dans les conduites (7, 8) est de 10 à 30 °C.

7. Procédé selon la revendication 1, **caractérisé en ce que** la température de l'halogénosilane de formule I dans la conduite (6) est de 10 à 30 °C.

8. Procédé selon la revendication 1, **caractérisé en ce que** l'introduction de l'halogénosilane de formule I et d'une partie de l'alcool de formule II a lieu à chaque fois dans la partie supérieure de la colonne (1) en dessous du garnissage le plus supérieur (1a).

9. Procédé selon la revendication 1, **caractérisé en ce que** l'introduction de la partie restante de l'alcool de formule II a lieu dans la partie inférieure de la colonne (1) au-dessus du garnissage le plus inférieur (1a).

10. Procédé selon la revendication 1, **caractérisé en ce que** la réaction des composés de formule I et II est réalisée dans une colonne (1), qui contient des corps de remplissage ou des garnissages structurés.

11. Procédé selon la revendication 1, **caractérisé en ce que** la réaction des composés de formule I et II a lieu dans la plage de pression comprise entre 700 hPa abs et 1 300 hPa abs.

12. Procédé selon la revendication 1, **caractérisé en ce que** le chauffage de la colonne (1) a lieu par un évaporateur à circulation (3), qui est disposé dans le tiers inférieur de la colonne (1) et chauffe le produit de fond se trouvant dans la colonne (1).

13. Colonne (1) pour l'estérification continue d'halogénosilanes de formule I avec des alcools de formule II en esters de silane de formule III selon la revendication 1, comprenant les éléments suivants :
A) une conduite (6), qui débouche dans le tiers supérieur de la colonne (1) et qui sert à l'introduction de l'halogénosilane de formule I,
B) une conduite (7), qui débouche dans le tiers supérieur de la colonne (1) et qui sert à l'introduction d'une partie de l'alcool de formule II nécessaire pour la réaction,
C) une conduite (8), qui débouche dans le tiers inférieur de la colonne (1) et qui sert à l'introduction de la partie restante de l'alcool nécessaire pour la réaction,
D) un évaporateur à circulation (3), qui est disposé dans le tiers inférieur de la colonne et chauffe le produit de fond se trouvant dans la colonne (1),
E) une conduite (9) pour le déchargement de l'halogénure d'hydrogène formé lors de la réaction par la tête de la colonne (1), et
F) une conduite (10) pour le déchargement du produit d'estérification de formule III formé lors de la réaction du fond de la colonne (1).

14. Colonne (1) selon la revendication 13, **caractérisée en ce qu'**un condensateur (2) est prévu à la tête de la colonne (1).

15. Colonne (1) selon la revendication 13, **caractérisée en ce qu'**un refroidisseur de produit (4) est prévu à l'extrémité inférieure de la colonne (1).

16. Colonne (1) selon la revendication 15, **caractérisée en ce qu'**une pompe (5) qui transporte le produit de réaction hors de la colonne (1) est raccordée après le refroidisseur de produit (4).
